(19) Europäisches Patentamt / European Patent Office / Office européen des brevets

(11) **EP 2 022 572 A1**

(12) **DEMANDE DE BREVET EUROPEEN**

(43) Date de publication:
**11.02.2009 Bulletin 2009/07**

(51) Int Cl.:
***B05C 13/02*** *(2006.01)*  ***B62D 65/18*** *(2006.01)*

(21) Numéro de dépôt: **08161306.9**

(22) Date de dépôt: **29.07.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **06.08.2007 FR 0756957**

(71) Demandeur: **Peugeot Citroën Automobiles SA 78140 Vélizy-Villacoublay (FR)**

(72) Inventeur: **Hureaux, Sébastien 70200, Lagny Danigon (FR)**

(74) Mandataire: **Allain, Laurent Peugeot Citroën Automobiles SA Propriété Industrielle (LG081) 18, rue des Fauvelles 92250 La Garenne Colombes (FR)**

(54) **Outil de manutention d'éléments de structure metallique de véhicule automobile.**

(57) L'invention concerne un outil de manutention d'éléments (2) de structures métalliques de véhicules automobiles, ledit outil (1) comprenant au moins une semelle (6) destinée à être rigidement fixée à une surface (22) de l'élément de structure (2), la semelle (6) présentant une zone d'appui prévue pour être appliquée contre la surface (22) de l'élément de structure (2). La zone d'appui porte au moins un relief (30, 32).

FIG.2

EP 2 022 572 A1

**Description**

La présente invention concerne en général la fabrication des véhicules automobiles.

Plus précisément, l'invention concerne un outil de manutention d'éléments de structure métallique de véhicule automobile, du type comprenant au moins une semelle destinée à être rigidement fixée à une surface de l'élément de structure, la semelle présentant une zone d'appui prévue pour être appliquée contre la surface de l'élément de structure.

Un tel outil est utilisé dans les ateliers de fabrication des véhicules automobiles. La fabrication comporte, entre autres, une étape de ferrage au cours de laquelle différents éléments de structure métallique sont assemblés les uns aux autres par soudage pour former le châssis du véhicule. L'étape de ferrage est suivie d'une étape de peinture par cataphorèse. Au cours de cette étape, le châssis du véhicule est immergé dans un bain de peinture hydrosoluble, le châssis étant relié à un générateur électrique de telle sorte que ce châssis joue le rôle de cathode. Les particules de peinture en suspension migrent dans le bain sous l'effet de la différence de potentiels, de l'anode vers la cathode. Les particules de peinture se déposent uniformément sur toute la surface immergée du châssis. Le bain est légèrement agité pendant l'opération. La peinture est ensuite cuite dans une étuve ou dans un four.

L'étape de cuisson est suivie par une étape de montage au cours de laquelle différents éléments mécaniques sont rapportés sur le châssis du véhicule.

Dans le cas de véhicules automobiles du type coupé cabriolet, l'outil de manutention, appelé également outil série, sert au cours de l'étape de ferrage à transporter les différents éléments de la toiture du véhicule, notamment le pavillon et les custodes gauche et droite. Cet outil accompagne le véhicule dans les bains de cataphorèse pendant l'étape de peinture, pour des raisons de procédé.

Au début de l'étape de montage, l'outil série est retiré du véhicule.

Dans le cas de véhicules de type coupé cabriolet, pendant l'étape de peinture par cataphorèse, les deux semelles de l'outil série sont rigidement fixées aux deux supports supérieurs droit et gauche des articulations du toit et de la lunette arrière. Ces supports sont des pièces métalliques présentant une surface supérieure sur laquelle est appliquée une zone d'appui de la semelle de l'outil série.

Lors d'essais de vieillissement destinés à tester la qualité de la peinture par cataphorèse déposée sur le châssis, il a été observé des taches de rouille sur les surfaces supérieures des supports d'articulation.

Ces taches de rouille se situent dans la zone du support sur laquelle est appliquée la semelle au cours de l'étape de peinture par cataphorèse.

Dans ce contexte, l'invention vise à proposer un outil de manutention permettant d'obtenir une meilleure qualité de peinture par cataphorèse des surfaces destinées à recevoir les semelles de l'outil de manutention.

A cette fin, l'invention porte sur un outil de manutention du type précité, caractérisé en ce que la zone d'appui porte au moins un relief.

L'outil de manutention peut également présenter une ou plusieurs des caractéristiques ci-dessous, considérées individuellement ou selon toutes les combinaisons techniquement possibles.

- le ou chaque relief est en creux par rapport à la zone d'appui ;
- la zone d'appui porte une pluralité de reliefs, au moins certains reliefs étant des rainures ;
- les rainures se croisent et forment un réseau ;
- parmi les rainures, des premières rainures s'étendent parallèlement les unes aux autres, au moins une seconde rainure s'étendant perpendiculairement aux premières rainures et coupant les premières rainures ;
- la zone d'appui est délimitée par une limite périphérique telle que, quand la zone d'appui est appliquée sur la surface de l'élément de structure, la zone de la semelle à l'extérieur de la limite périphérique n'est pas appliquée sur ladite surface, au moins certaines rainures présentant des extrémités débouchantes au niveau de la limite périphérique ;
- chaque rainure présente une section droite de diamètre hydraulique compris entre 1 et 10 mm ;
- le ou chaque relief est en saillie par rapport à la zone d'appui ; et
- la zone d'appui comporte une pluralité de reliefs, au moins certains reliefs étant des bossages.

D'autres caractéristiques et avantages de l'invention ressortiront de la description détaillée qui en est donnée ci-dessous, à titre indicatif et nullement limitatif, en référence aux figures annexées, parmi lesquelles :

- la figure 1 est une vue en perspective de l'outil de manutention du pavillon d'un véhicule en cours de fabrication, et des supports supérieurs droit et gauche d'articulation du toit d'un véhicule de type coupé cabriolet, ces supports étant destinés à recevoir les semelles de l'outil de manutention ;
- la figure 2 est une vue agrandie en perspective d'une semelle de l'outil de manutention de la figure 1 appliquée contre le support d'articulation ; et
- la figure 3 est une vue de dessous de la zone d'appui d'une semelle de l'outil de l'invention destinée à être appliquée sur le support d'articulation.

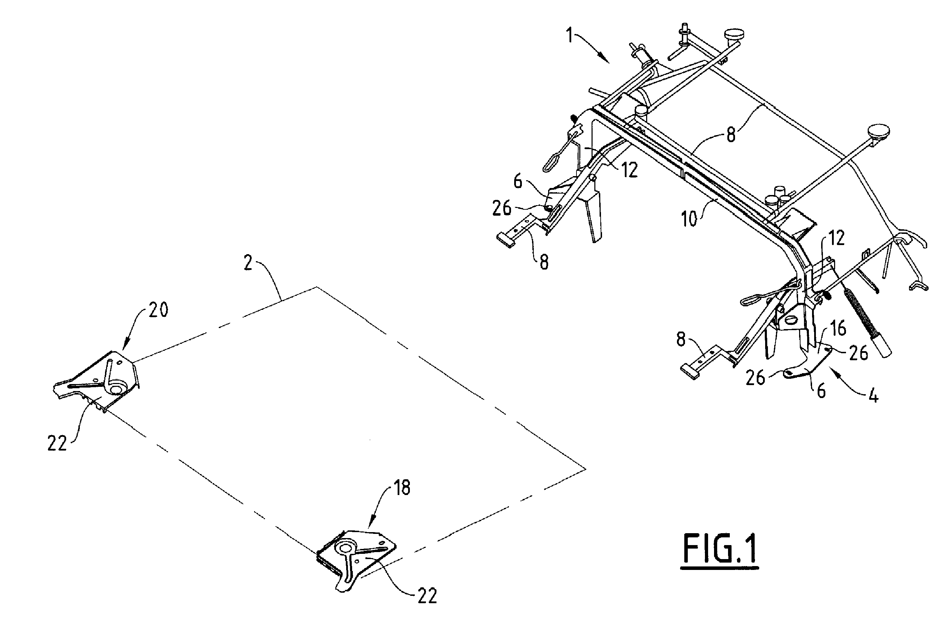

L'outil série 1 représenté sur la figure 1 est destiné à la manutention et au transport de différents éléments de la toiture d'un véhicule, par exemple le pavillon 2 du véhicule ou les custodes droite et gauche de ce véhicule. Le pavillon est représenté en traits mixtes sur la figure 1.

L'outil série comporte un arceau 4, deux semelles d'appui 6 rigidement fixées à l'arceau 4, et une pluralité de membres 8 destinés soit à agripper les éléments de toiture à transporter, soit à permettre l'accrochage de l'outil série sous un engin de levage. Cet engin de levage peut par exemple être un pont roulant.

L'arceau 4 présente une traverse centrale 10 et deux montants latéraux 12 s'étendant perpendiculairement à la traverse à partir des deux extrémités de celle-ci.

Les semelles 6 sont des plaques s'étendant sensiblement perpendiculairement aux montants 12. Chaque semelle présente une faible épaisseur relativement à ses dimensions dans un plan perpendiculaire aux montants 12. L'épaisseur est prise parallèlement aux montants 12. Chaque semelle présente une forme complexe, sensiblement en L, délimitée par un bord périphérique 14 à contour fermé. Chaque semelle 6 est rigidement fixée à l'extrémité d'un des montants 12 par une grande face 16 visible sur la figure 1.

Comme le montre la figure 1, le pavillon 2 du véhicule porte deux supports supérieurs d'articulation droit et gauche, respectivement 18 et 20. Ces supports sont rigidement fixés dans des parties arrière droite et arrière gauche respectivement du pavillon 2. Les supports 18 et 20 sont des pièces embouties en tôle. Elles sont destinées à recevoir les mécanismes d'articulation du toit et de la lunette d'un véhicule de type coupé cabriolet. Chaque support 18, 20 présente à l'opposé du pavillon 2 une surface supérieure libre 22 destinée à recevoir de manière temporaire l'une des semelles 6 de l'outil série.

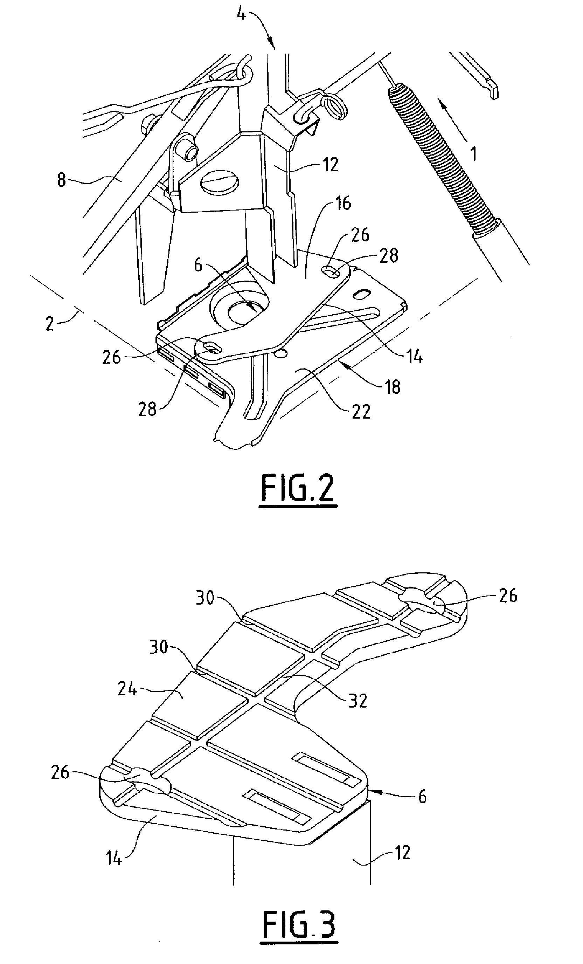

Plus précisément, pendant l'étape de peinture par cataphorèse, les semelles 6 de l'outil série sont destinées à être rigidement fixées sur les surfaces supérieures 22 des supports d'articulation. Pendant cette étape, les grandes faces 24 des semelles opposées aux montants 12 sont appliquées sur les surfaces supérieures 22 des supports d'articulation, comme illustré sur la figure 2. Des orifices respectifs 26 et 28 des semelles et des supports d'articulation sont placés en vis-à-vis. Des boulons (non représentés) traversent les orifices 26 et 28 alignés et solidarisent les semelles aux supports d'articulation.

De manière à permettre la circulation de la peinture des bains de cataphorèse entre la semelle et le support d'articulation, la grande face 24 porte une pluralité de reliefs en creux. Comme le montre la figure 3, ces reliefs sont des nervures 30, 32, qui se croisent en formant un réseau. Les nervures 30, 32 débouchent les unes dans les autres à leurs intersections mutuelles. Une pluralité de premières rainures 30 s'étendent parallèlement les unes aux autres. De préférence, elles sont régulièrement espacées les unes des autres. Une seconde rainure 32 s'étend perpendiculairement aux premières rainures 30 et coupe les premières rainures 30. Chacune des rainures 30, 32 est ouverte à ses deux extrémités et débouche au niveau du bord périphérique 14 de la semelle.

Typiquement, chacune des rainures 30, 32 présente une section droite en demi-disque. Par exemple, chaque rainure peut présenter une section droite de diamètre hydraulique compris entre 1 mm et 10 mm, de préférence compris entre 1 mm et 5 mm, et compris typiquement entre 1,5 mm et 2 mm. Le diamètre hydraulique s'exprime de la manière suivante :

$$Dh = 4\,A/P$$

où Dh est le diamètre hydraulique,
A est la section, et
P est le périmètre de la section.

Typiquement, les rainures présentent un diamètre compris entre 1 mm et 5 mm, par exemple compris entre 2,5 mm et 3 mm.

L'outil série décrit ci-dessus présente de multiples avantages.

Du fait que la zone d'appui de la semelle, c'est-à-dire la grande face 24, est pourvue d'au moins un relief, la circulation de la peinture du bain de cataphorèse entre la semelle et le support d'articulation correspondant est rendue plus facile. La qualité du revêtement de peinture de la surface se trouvant sous la zone d'appui de la semelle est améliorée, de telle sorte que, à long terme, le risque que la surface se corrode est diminué.

La qualité du revêtement de peinture est particulièrement bonne lorsque les reliefs sont des reliefs en creux, notamment des rainures agencées en réseau. En effet, la peinture peut circuler d'une rainure à l'autre et se répartir sur toute la surface de l'élément à revêtir qui est couverte par la semelle. Des rainures de section droite de diamètre hydraulique compris entre 1 mm et 10 mm conviennent particulièrement bien dans ce contexte.

Les rainures peuvent être réalisées dans les semelles de manière simple et économique.

On observe que le dépôt de peinture par cataphorèse est particulièrement régulier et uniforme sur la surface recevant la zone d'appui des semelles.

L'outil peut présenter de multiples variantes.

Ainsi, le nombre de rainures pratiquées sur la surface d'appui de la semelle peut être plus ou moins grand en fonction des besoins. Les premières rainures, parallèles les unes aux autres, peuvent être plus ou moins espacées. Ces rainures peuvent être coupées à angle droit par un nombre de secondes rainures différent de un, par exemple deux, trois, ou même plus de trois rainures. Les premières et les secondes rainures ne sont pas nécessairement perpendiculaires les unes aux autres, et peuvent être agencées librement en fonction de la forme de la semelle. Les premières rainures ne sont pas nécessairement parallèles les unes aux autres. Les secondes rainures peuvent être parallèles ou ne pas être parallèles les unes aux autres. Les rainures peuvent ne pas être rectilignes mais au contraire être sinueuses.

Les reliefs en creux peuvent également ne pas être des rainures mais présenter toute sorte de forme, circulaire, rectangulaire ou toute autre forme adaptée. De préférence, ces reliefs sont reliés les uns aux autres par des canaux permettant à la peinture de cataphorèse de circuler d'un relief à un autre.

Les reliefs peuvent également ne pas être des reliefs en creux mais plutôt des reliefs en saillie par rapport à la zone d'appui de la semelle. Par exemple, ces reliefs peuvent être des bossages. Dans ce cas, les bossages font saillie par rapport à la zone d'appui de la semelle sur une hauteur comprise entre 1 mm et 5 mm, typiquement sur 1,5 mm. Ces bossages peuvent être circulaires ou présenter toute sorte de forme adaptée. La semelle peut porter deux bossages, trois bossages, quatre bossages ou même plus de quatre bossages répartis de manière adaptée sur la zone d'appui de la semelle.

L'invention a été décrite dans le cadre d'un outil de manutention d'éléments de la toiture du véhicule, mais peut s'appliquer à des outils de manutention d'autres éléments du véhicule, par exemple des parties de carrosserie.

L'invention a été décrite dans le contexte d'un outil de manutention accompagnant le châssis du véhicule dans un bain de cataphorèse. Elle pourrait s'appliquer à un outil de manutention accompagnant un élément du véhicule dans une étape de traitement différente, nécessitant l'immersion dudit élément dans un flux liquide ou gazeux.

**Revendications**

1. Outil de manutention d'éléments (2) de structures métalliques de véhicules automobiles, ledit outil (1) comprenant au moins une semelle (6) destinée à être rigidement fixée à une surface (22) de l'élément de structure (2), la semelle (6) présentant une zone d'appui (24) prévue pour être appliquée contre la surface (22) de l'élément de structure (2), **caractérisé en ce que** la zone d'appui (24) porte au moins un relief (30, 32).

2. Outil de manutention selon la revendication 1, **caractérisé en ce que** le ou chaque relief (30, 32) est en creux par rapport à la zone d'appui (24).

3. Outil de manutention selon la revendication 2, **caractérisé en ce que** la zone d'appui (24) porte une pluralité de reliefs, au moins certains reliefs étant des rainures (30, 32).

4. Outil de manutention selon la revendication 3, **caractérisé en ce que** les rainures (30, 32) se croisent et forment un réseau.

5. Outil de manutention selon la revendication 3 ou 4, **caractérisé en ce que,** parmi les rainures, des premières rainures (30) s'étendent parallèlement les unes aux autres, au moins une seconde rainure (32) s'étendant perpendiculairement aux premières rainures (30) et coupant les premières rainures (30).

6. Outil de manutention selon l'une quelconque des revendications 3 à 5, **caractérisé en ce que** la zone d'appui (24) est délimitée par une limite périphérique (14) telle que, quand la zone d'appui (24) est appliquée sur la surface (22) de l'élément de structure (2), la zone de la semelle (6) à l'extérieur de la limite périphérique (14) n'est pas appliquée sur ladite surface (22), au moins certaines rainures (30, 32) présentant des extrémités débouchantes au niveau de la limite périphérique (14).

7. Outil de manutention selon l'une quelconque des revendications 3 à 6, **caractérisé en ce que** chaque rainure (30, 32) présente une section droite de diamètre hydraulique compris entre 1 et 10 mm.

8. Outil de manutention selon la revendication 1, **caractérisé en ce que** le ou chaque relief est en saillie par rapport à la zone d'appui (24).

9. Outil de manutention selon la revendication 8, **caractérisé en ce que** la zone d'appui (24) comporte une pluralité de reliefs, au moins certains reliefs étant des bossages.

EP 2 022 572 A1

FIG.1

FIG.2

FIG.3

**Office européen
des brevets**

**RAPPORT DE RECHERCHE EUROPEENNE**

Numéro de la demande

EP 08 16 1306

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EP 0 654 548 A (NÜTRO) 24 mai 1995 (1995-05-24) * colonne 7, ligne 55 - colonne 8, ligne 6; figure 6 * ----- | 1 | INV. B05C13/02 B62D65/18 |
| A | DE 10 2005 055812 A (EDSCHA) 24 mai 2007 (2007-05-24) ----- | | |
| A | GB 1 395 383 A (CARRIER DRYSIS) 29 mai 1975 (1975-05-29) ----- | | |

DOMAINES TECHNIQUES
RECHERCHES (IPC)

B05C
B62D
B66C
B65G

Le présent rapport a été établi pour toutes les revendications

| Lieu de la recherche | Date d'achèvement de la recherche | Examinateur |
|---|---|---|
| Berlin | 19 septembre 2008 | Krieger, Philippe |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................
& : membre de la même famille, document correspondant

**ANNEXE AU RAPPORT DE RECHERCHE EUROPEENNE
RELATIF A LA DEMANDE DE BREVET EUROPEEN NO.**

EP 08 16 1306

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-09-2008

| Document brevet cité au rapport de recherche | | Date de publication | Membre(s) de la famille de brevet(s) | | Date de publication |
|---|---|---|---|---|---|
| EP 0654548 | A | 24-05-1995 | AT | 169965 T | 15-09-1998 |
| | | | CZ | 9402751 A3 | 13-09-1995 |
| | | | DE | 9415138 U1 | 16-03-1995 |
| | | | DE | 9421943 U1 | 07-05-1997 |
| | | | DK | 654548 T3 | 25-05-1999 |
| | | | ES | 2120557 T3 | 01-11-1998 |
| | | | HU | 71013 A2 | 28-11-1995 |
| | | | PL | 305936 A1 | 29-05-1995 |
| | | | SK | 138794 A3 | 13-09-1995 |
| DE 102005055812 A | | 24-05-2007 | AUCUN | | |
| GB 1395383 | A | 29-05-1975 | AUCUN | | |

EPO FORM P0460

Pour tout renseignement concernant cette annexe : voir Journal Officiel de l'Office européen des brevets, No.12/82